# EUROPÄISCHE PATENTSCHRIFT

(11) **EP 0 727 644 B1**
(45) Veröffentlichungstag und Bekanntmachung des Hinweises auf die Patenterteilung: **09.12.1998**
(21) Anmeldenummer: 96101078.2
(22) Anmeldetag: 25.01.1996
(51) Int. Cl.: G01D 5/14

(54) **Sensoranordnung**
Sensor arrangement
Dispositif détecteur

(30) Priorität: 14.02.1995 DE 19504870
(43) Veröffentlichungstag der Anmeldung: 21.08.1996
(73) Patentinhaber: SIEMENS AKTIENGESELLSCHAFT, 80333 München (DE)
(72) Erfinder: Draxelmayr, Dieter, Dr., A-9500 Villach (AT)

(56) Entgegenhaltungen:
- DE-A- 4 324 486
- US-A- 4 518 918

## Beschreibung

Die Erfindung betrifft eine Sensoranordnung, insbesondere eine Hall-Sensoranordnung, gemäß dem Oberbegriff des Patentanspruches 1.

Eine möglichst exakte Erfassung verschiedener Zustandsgrößen spielt im technischen Bereich, beispielsweise für Kfz-Anwendungen, eine immer wichtiger werdende Rolle. Zum einen soll einem Verbraucher ein gesteigerter Komfort angeboten werden, zum anderen werden immer höhere technische Anforderungen gestellt, beispielsweise die Erfüllung von Verbrauchs- und Abgasnormen oder sicherheitsrelevante Anwendungen in der Automobiltechnik. Regelmäßig müssen physikalische oder chemische Größen mit Hilfe von Sensoren in elektrische Signale umgesetzt werden, die für eine Regelung oder Steuerung von Systemen bzw. Prozessen weiterverarbeitet werden können.

Die Sensoren als Bindeglied zwischen physikalischer oder chemischer Umgebung und elektrischer Signalverarbeitung unterliegen andererseits selbst physikalischen und chemischen Einflüssen. Hierzu zählen insbesondere Abhängigkeiten ihrer Eigenschaften hinsichtlich der Temperatur, des mechanischen Stresses und der elektrischen Robustheit. Hinzu kommen systembedingte Fehler, beispielsweise Timingfehler in digitalen Systemen. In dynamischen Systemen soll eine möglichst gute Trennung der dynamischen Meßsignale von statischen oder stationären Größen bzw. Meßsignalen erreicht werden.

Ein Beispiels für die vorstehend genannten Probleme ist die Erfassung von Position, Drehzahl oder Winkel mechanischer Teile. Als Sensoren lassen sich vorteilhaft magnetische Geber oder Sensoren einsetzten. Hall-Sensoren, die den Hall-Effekt ausnützen, haben aufgrund ihrer Genauigkeit und Zuverlässigkeit bei der Erfassung mechanischer Größen eine besondere Bedeutung erlangt. Stark zunehmend werden integrierte Hall-Sensoren eingesetzt, wie sie beispielsweise in den Veröffentlichungen K. Fischer: Dynamische Differenz-Hall-ICs erfassen Drehzahl, Position und Winkel, Components 30, 1992, H. 3, Seite 91 bis 95 und P. Schiefer: Hall-Effekt-Sensoren zur Positions- und Drehzahlerkennung, Automobil professional 2/92, Seite 42 bis 45 bekannt geworden sind.

Aus der EP-A-0 548 391 ist ein integrierbarer Hall-Sensor bekannt, der eine Offset-Kompensation hinsichtlich parasitärer mechanischer Streßfaktoren, insbesondere des Piezoeffekts, aufweist. In den vorgenannten Veröffentlichungen umfaßt die Sensoranordnung ein erstes und zweites Sensorelement, deren Ausgangssignale mit einer Differenzeinrichtung weiter verarbeitet werden.

Weitere Schaltungsanordnungen zur Auswertung von Hall-Sensorsignalen sind aus den Druckschriften US 4,518,918 und DE 43 24 486 C1 bekannt. Die US 4,518,918 beschreibt eine Schaltungsanordnung, die zwei Hallelemente aufweist, deren Ausgänge paarweise durch je einen Summationspunkt verbunden sind. Der erste Summationspunkt ist mit einem ersten Eingang einer ersten Differenzstufe verbunden, deren zweiter Eingang mit Masse verbunden ist. Der Ausgang dieser ersten Differenzstufe ist mit dem zweiten Summationspunkt und mit einem ersten Eingang einer zweiten Differenzstufe verbunden, deren zweiter Eingang ebenfalls mit Masse verbunden ist. Die in DE 43 24 486 C1 beschriebene Schaltungsanordnung weist ebenfalls zwei Hallelemente mit jeweils zwei Sensorausgängen auf. Erste Sensorausgänge dieser Hallelemente sind untereinander verbunden und zweite Sensorausgänge der Hallelemente sind auf einen Vorverstärker einer Verstärkereinrichtung geschaltet.

Bei Sensoranordnungen zur Erfassung differentieller Meßgrößen sind zwei Sensorelemente erforderlich, deren Ausgangssignale durch eine Differenzeinrichtung ausgewertet werden. Typischerweise ist jedoch einer Wechselgröße, die mit Hilfe der Differenzanordnung ausgewertet werden soll, eine Gleichgröße überlagert. Mitunter ist es problematisch, ein differentielles Ausgangssignal zu erzeugen, das von der auf die Sensoranordnung wirkenden Gleichgröße unabhängig ist.

Ein Beispiel für die vorstehend genannte Problematik besteht bei integrierten Hall-Sensoren, wie sie in den vorgenannten Veröffentlichungen erläutert sind. Dabei speisen zwei an unterschiedlichen Stellen eines Halbleiterchips angeordnete Hall-Sensorelemente eine Differenzeinrichtung, die als Operationsverstärker (OTA = Operational Transconductance Amplifier) wirkt. Über eine Substraktion der von den Sensorelementen gelieferten Sensorsignale wird die gewünschte Übertragungsfunktion, nämlich die Ausgangsgröße des Operationsverstärkers in Abhängigkeit von der Magnetfelddifferenz an den beiden Hall-Elementen erreicht.

Wünschenswert ist eine lineare Beziehung zwischen der Ausgangsgröße des Operationsverstärkers und den zu messenden Feldgrößen. Ein vorhandenes Gleichfeld soll auf das Ergebnis der Messung keinen Einfluß haben. Das bedeutet, daß die Ausgangsgröße des Operationsverstärkers bei einem vorgegebenen Wechselfeld unabhängig davon gleich sein soll, ob keines oder ob ein sehr hohes Gleichfeld vorhanden ist.

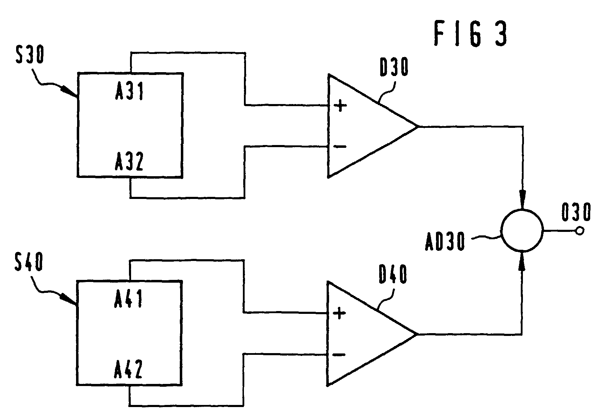

FIG 3 zeigt eine typische Anordnung mit zwei Sensoren und einer nachgeschalteten Differenzeinrichtung. Ein Sensorelement S30 liefert an seinen Ausgängen A31 und A32 ein erstes und ein zweites Sensorsignal, die eine Differenzstufe D30, beispielsweise einem Operationsverstärker zugeführt werden. In ähnlicher Weise speisen die Ausgänge eines zweiten Sensorelements S40 eine zweite Diffenzstufe D40. Die Ausgangssignale von D30 und D40 werden subtrahiert, so daß am Ausgang 030 die gewünschte Übertragungsfunktion als Funktion der Differenz der von den beiden Sensorelementen gemessenen Meßgrößen anliegt. Die gezeigte Schaltung ist nicht unabhängig von der Größe eines Gleichfeldes. Bei großen Gleichfeldern sinkt die Verstärkung der Differenzstufen D30 und D40 aufgrund der durch die Gleichfelder bewirkten großen Aussteuerung.

Die Differenzschaltung der Differenzstufen D30 bzw. D40 kann unsymmetrisch ausgelegt sein. Bei Magnetfeldsensoren ist dies durch die magnetische Vorspannung erlaubt, die eine relativ große Sensor- bzw. Hall-Spannung erzeugt. Das überlagerte Nutzsignal ist kleiner. Durch ein unsymmetrisches Transistorverhältnis wird dafür gesorgt, daß sich die Schaltung trotz Vorspannung im steilen Teil der Kennlinie befindet. Die unsymmetrische Auslegung der Transistorverstärker ist jedoch auf einen bestimmten Betriebsfall ausgelegt. Mit Änderungen der statischen oder stationären Meßgröße, z.B. bei Wahl eines anderen Vorspannungsmagneten oder bei starken Temperaturschwankungen, die die abgegebene Meßgröße wesentlich beeinflussen, kann sich der Arbeitspunkt so ändern, daß eine deutliche Empfindlichkeitsreduktion die Folge ist.

Der Erfindung liegt die Aufgabe zugrunde, eine Sensoranordnung mit verbesserten Eigenschaften gegenüber Änderungen der statischen Meßgröße anzugeben.

Diese Aufgabe löst die Erfindung durch die Merkmale des Patentanspruchs 1. Eine Ausgestaltung der Erfindung ist in Patentanspruch 2 gekennzeichnet.

Die Erfindung hat den Vorteil, daß sich erheblich verbesserte Eigenschaften der Sensoreigenschaften bei einer großen zulässigen Bandbreite der die Anordnung beeinflussenden Parameter ergibt.

Die Erfindung wird nachfolgend anhand von in den Figuren der Zeichnung dargestellten Ausführungsbeispielen näher erläutert.
Es zeigen:
FIG 1 ein erstes schematisches Ausführungsbeispiel,
FIG 2 ein zweites schematisches Ausführungsbeispiel, und
FIG 3 eine bekannte Sensoranordnung.

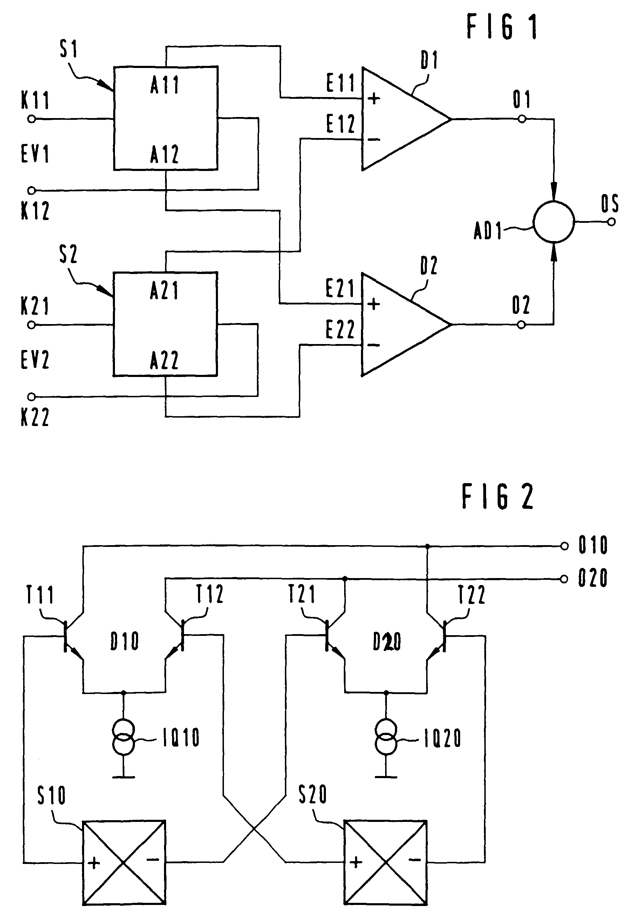

FIG 1 enthält die beiden Sensorelemente S1 und S2, die beispielsweise Hall-Elemente sein können. S1 wird über die Klemmen K11 und K12 von einer Energieversorgung EV1 gespeist, während S2 über die Klemmen K21 und K22 von einer Energieversorgung EV2 versorgt wird. Den Sensorelementen nachgeschaltet ist eine Differenzeinrichtung aus einer ersten Differenzstufe D1 und einer zweiten Differenzstufe D2. Die Ausgänge der Sensorelemente, d.h. die Sensorsignalanschlüsse A11 und A12 bzw. A21 und A22 sind kreuzweise mit den Eingängen E11 und E12 bzw. E21 und E22 der Differenzstufen D1 und D2 verbunden. Das bedeutet, daß A11 mit E11 und A12 mit E21 sowie A21 mit E12 und A22 mit E22 verbunden sind. Den Differenzstufen nachgeschaltet ist ein Addierer AD1, der eine gegenpolige Addition der Signale an den Ausgangsklemmen O1 und 02 der Differenzstufen vornimmt. Am Ausgang OS der Addierstufe ist das Ausgangssignal, als einpoliges Signal (single end) abgreifbar.

FIG 2 zeigt ein weiteres Ausführungsbeispiel, bei dem lediglich die Sensorsignalanschlüsse der beiden Sensoren S10 und S20 aus Gründen der Übersichtlichkeit eingezeichnet sind. Zwei Differenzstufen D10 und D20 enthalten jeweils zwei Bipolartransistoren T11 und T12 sowie T21 und T22, deren Emitter paarweise miteinander verbunden sind. D10 wird von einer Stromquelle IQ10 und D20 von einer Stromquelle IQ20 gespeist. Der positive Sensorsignalanschluß der Sensorelemente S10 bzw. S20 sind mit den Eingangsanschlüssen der Transistoren T11 und T12 verbunden. Die negativen Sensorsignalanschlüsse der Sensorelemente S10 und S20 sind mit den Eingängen der Transistoren T21 und T22 verbunden. Die Subtraktion der Ausgangssignale der Differenzstufen wird erreicht, in dem die Ausgänge von T12 und T21 und von T11 und T22 miteinander verbunden und mit den Ausgangsklemmen O20 bzw. O10 verbunden sind. 010 und 020 bilden komplementäre Ausgänge mit komplementären Signalen.

Als Schaltungsalternative zu FIG 2 können die positiven Sensorausgänge von S10 und S20 wie in FIG 2 mit T11 und T12 verbunden sein, während der negative Sensorausgang von S10 mit T22 und der negative Sensorausgang von S20 mit T21 verbunden ist. In diesem Fall wären die Ausgänge von T11 und T21 sowie von T12 und T22 jeweils miteinander zu verbinden.

Gemäß den FIG 1 und 2 verwenden die Differenzstufen die Differenz der jeweils gleichen Pole der Sensorelemente als Eingangssignal, da zwei Sensorsignalanschlüsse kreuzweise auf die Differenzstufen gekoppelt sind. Die Sollübertragungsfunktion der Anordnungen gemäß FIG 1 und FIG 2 ist die gleiche wie bei der Anordnung gemäß FIG 3, allerdings ist die Aussteuerung auf jeweils die halbe Sensorausgangsspannungsdifferenz reduziert. Eine überlagerte Gleichgröße, beispielsweise ein Gleichmagnetfeld, wirkt sich kaum mehr aus. Die Differenzstufen D1, D2 bzw. D10 und D20 stellen eine hochohmige Last dar, so daß auch ein unterschiedlicher Innenwiderstand der Sensorelemente praktisch keinen negativen Einfluß auf die Signalverarbeitung hat.

Gemäß FIG 2 können die Differenzstufe D10 und D20 vollkommen symmetrisch ausgelegt sein. Eine beliebige Vorspannung der Sensorelemente, beispielsweise bei Hall-Elementen mit einem Gleichfeld, bewirkt keine differentielle Aussteuerung eine Differenzstufe. Lediglich der Gleichtaktbereich wird geringfügig verschoben. Unabhängig von einer gewählten Gleichgröße wird deshalb immer die maximale Empfindlichkeit gewährleistet.

Eine Anordnung eines differentiellen Sensorelements in integrierter Form ist aus den vorgenannten Veröffentlichungen bekannt. Beispielsweise können die beiden Sensorelemente an zwei Randbereichen eines Halbleiterchips angeordnet sein, während die Auswerteschaltung in der Mitte zwischen beiden Sensorelementen liegt.

Beim Entwurf einer integrierten Sensoranordnung und eines Platinenlayouts sind auch die EMV-Festigkeit der Sensoranordnung zu berücksichtigen. Obwohl integrierte Schaltkreise üblicherweise keine große Empfindlichkeit gegenüber einer Hochfrequenz-Einstrahlung haben, bekommen Sensoranordnungen aufgrund der Platinenbeschaltung und eines Anschlußkabels oft verhältnismäßig große Störleistungen eingekoppelt. Da chipintern teilweise nur Signalspannungen von wenigen 100 µV zur Verfügung stehen, können Schwierigkeiten auftreten. Wie die Erfindung zeigt, können Störempfindlichkeiten durch ein weitgehend differentielles Design (FIG 2) und eine maximale Versorgungsspannungsunterdrückung bei hohen Frequenzen erreicht werden.

Eine Maßnahme zur Unterdrückung von hochfrequenten Einkopplungen und zur Verbesserung des EMV-Verhaltens liegt in einer Maßnahme, die durch den Aufbau einer integrierten Sensoranordnung möglich ist. Alle Elemente einer integrierten Anordnung liegen in einem gemeinsamen Substrat. Abhängig von der verwendeten Technologie ist dieses Substrat üblicherweise mit der positiven oder negativen Versorgungsspannung verbunden. Schutz gegen EMV-Einflüsse wird dann erreicht, wenn das Substrat einheitlich als Hochfrequenzbezugspotential betrieben wird. D.h., daß alle Eingänge, Ausgänge oder Hilfsanschlüsse der integrierten Sensoranordnung gegen jenes Potential hochfrequent kurzzuschließen sind, an das auch das Substrat angeschlossen ist. Der hochfrequente Kurzschluß wird typischerweise mit Hilfe von Kapazitäten bewirkt. Diese Maßnahme gilt auch für jene externen Bauelemente auf einer Platine, die sich auf die Funktion der integrierten Sensoranordnung auswirken können. Um Verkopplungen über gemeinsame Masseleitungen zu vermeiden, ist der Bezugspunkt so weit wie möglich als Sternpunkt auszuführen.

## Patentansprüche

1. Sensoranordnung mit einem ersten und einem zweiten Sensorelement, die jeweils zwei Sensorsignalanschlüsse haben, an denen ein erstes und ein zweites Sensorsignal abgreifbar ist und die mit einer Differenzeinrichtung verbunden sind, die eine erste und eine zweite Differenzstufe mit jeweils zwei Eingängen enthält,
**dadurch gekennzeichnet,**
daß der erste Sensorsignalanschluß (A11; +) des ersten Sensorelements (S1; S10) und der zweite Sensorsignalanschluß (A22; -) des zweiten Sensorelements (S2; S20) mit dem ersten Eingang (E11; T11) der ersten Differenzstufe (D1; D10) bzw. mit dem zweiten Eingang (E22; T22) der zweiten Differenzstufe (D2; D20) verbunden ist und daß der zweite Sensorsignalanschluß (A12; -) des ersten Sensorelements (S1, S10) und der erste Sensorsignalanschluß (A21; +) des zweiten Sensorelements (S2; S20) mit dem ersten Eingang (E12; T12) der zweiten Differenzstufe (D2; D20) bzw. mit dem zweiten Eingang (E12; T12) der ersten Differenzstufe (D1; D10) verbunden ist.

2. Anordnung nach Anspruch 1,
**dadurch gekennzeichnet,**
daß die Sensorelemente Hall-Elemente sind.

## Claims

1. Sensor arrangement having a first and a second sensor element, which each have two sensor signal connections at which a first and a second sensor signal can be tapped off and which are connected to a difference device which contains a first and a second difference stage each having two inputs, characterized in that the first sensor signal connection (A11; +) of the first sensor element (S1; S10) and the second sensor signal connection (A22; -) of the second sensor element (S2; S20) are connected to the first input (E11; T11) of the first difference stage (D1; D10) and, respectively, to the second input (E22; T22) of the second difference stage (D2; D20), and in that the second sensor signal connection (A12; -) of the first sensor element (S1; S10) and the first sensor signal connection (A21; +) of the second sensor element (S2; S20) are connected to the first input (E12; T12) of the second difference stage (D2; D20) and, respectively, to the second input (E12; T12) of the first difference stage (D1; D10).

2. Arrangement according to Claim 1, characterized in that the sensor elements are Hall elements.

## Revendications

1. Dispositif détecteur comportant un premier élément détecteur et un deuxième élément détecteur, qui ont chacun deux bornes de signal de détecteur, auxquelles un premier et un deuxième signal de détecteur peuvent être prélevés et qui sont reliés à un dispositif différentiel qui comporte un premier et un deuxième étage différentiel ayant chacun deux entrées, caractérisé en ce que la première borne (A11 ; +) de signal de détecteur du premier élément (S1 ; S10) détecteur et la deuxième borne (A22 ; -) de signal de détecteur du deuxième élément (S2 ; S20) détecteur sont reliées respectivement à la première entrée (E11 ; T11) du premier étage (D1 ; D10) différentiel et à la deuxième entrée (D22 ; T22) du deuxième étage (D2 ; D20) différentiel et en ce que la deuxième borne (A12 ; -) de signal de détecteur du premier élément (S1 ; S10) détecteur et la première borne (A21 ; +) de signal de détecteur du deuxième élément (S2 ; S20) détecteur sont reliées respectivement à la première entrée (E12 ; T12) du deuxième étage (D2 ; D20) différentiel et à la deuxième entrée (E12 ; T12) du premier étage (D1; D10) différentiel.

2. Dispositif selon la revendication 1, caractérisé en ce que les éléments détecteurs sont des éléments Hall.
